# DEMANDE DE BREVET EUROPEEN

(11) **EP 4 763 667 A1**
(43) Date de publication de la demande: **24.06.2026**
(21) Numéro de dépôt: 25225381.0
(22) Date de dépôt: 19.12.2025
(51) Int. Cl.: B62B 3/10, B62B 3/16, B62B 5/06

(54) **SYSTÈME DE TRANSPORT D'ÉQUIPEMENTS RÉEMPLOYABLES**

(30) Priorité: 20.12.2024 FR 2414837
(71) Demandeur: Seml Semelog, 92390 Villeneuve-la-Garenne (FR)
(72) Inventeur: BRANCHET, Gilbert, 75011 Paris (FR)
(74) Mandataire: Santarelli

(57) **Abrégé**

L'invention concerne un système de transport d'équipements, comprenant un chariot porteur (10) et des équipements présentant des dimensions différentes, à savoir un premier équipement (40, 50) et un deuxième équipement (60), le deuxième équipement (60) comprenant un réceptacle adapté pour loger le premier équipement (40, 50), le chariot porteur (10) comprenant un châssis (14) pourvu d'un organe de calage (24), le premier équipement (40, 50) et le deuxième équipement (60) étant pourvus respectivement d'un premier organe de positionnement (42, 54) et d'un deuxième organe de positionnement (66) configurés chacun pour coopérer avec l'organe de calage (24) par engagement par complémentarité de formes ; le chariot porteur (10) étant ainsi configuré pour transporter, sélectivement, le premier équipement (40, 50), le deuxième équipement (60), ainsi que le premier équipement (40, 50) et le deuxième équipement (60) lorsque le premier équipement (40, 50) est logé dans le réceptacle du deuxième équipement (60).

## Description

### DOMAINE TECHNIQUE DE L'INVENTION

L'invention concerne le domaine général du transport et de la logistique.

Plus précisément, l'invention concerne un système de transport d'équipements réemployables, tels que des équipements pour stocker et transporter de la nourriture, comme des bacs ou des couvercles.

L'invention trouve une application préférée, mais pas limitative, dans la distribution de nourriture dans des lieux de restauration collective, la nourriture étant stockée et transportée à l'aide d'équipements réemployables.

### ÉTAT DE LA TECHNIQUE

Dans les lieux de restauration collective, la nourriture est généralement conditionnée et distribuée dans des équipements, tels que des bacs scellés avec un film souple, en plastique. En particulier, la nourriture est d'abord conditionnée dans les équipements au sein de cuisines centrales, puis est transportée dans les lieux de restauration collective où ces équipements sont placés sur des chariots porteurs avant d'être distribués. Une fois vidés, ces équipements en plastique sont jetés, après une seule utilisation. Il va de soi que cela soulève des préoccupations écologiques.

Pour remédier à cela, il a été proposé de remplacer les équipements en plastique par des équipements en acier inoxydable. De tels équipements sont dits « réemployables » car ils peuvent être nettoyés et réutilisés plusieurs fois. Ce remplacement implique la création d'une filière spécifique dédiée au nettoyage et au stockage des équipements réemployables, avec un site de nettoyage et de stockage ainsi que des moyens pour transporter les équipements réemployables et les chariots porteurs entre le site de nettoyage et de stockage, la ou les cuisines centrales et les lieux de restauration collective.

Actuellement, il existe plusieurs types d'équipements réemployables, par exemple des bacs en acier inoxydable prévus pour recevoir de la nourriture, leur couvercle, également en acier inoxydable, pour refermer les bacs, et des caisses filaires pour stocker et transporter des bacs en acier et/ou leur couvercle. Les caisses filaires ont donc des dimensions supérieures à celles des bacs et des couvercles.

Lorsqu'ils sont propres, les bacs et leur couvercle sont disposés soit dans des cagettes en plastique scellées avec du film plastique puis mises sur des palettes classiques depuis le site de nettoyage et de stockage avant d'être transportés ainsi vers la cuisine centrale grâce à des chariots de manutention, soit dans des caisses palettes puis mises à l'intérieur de caisses palettes avant d'être transportés ainsi depuis le site de nettoyage et de stockage vers la cuisine centrale grâce à des chariots de manutention. Lorsqu'ils sont sales, les bacs et leur couvercle sont placés dans les caisses filaires, lesquelles sont ensuite disposées sur des socles rouleurs.

Les socles rouleurs sont alors transportés à vide lors des trajets allant du site de nettoyage et de stockage (matériel propre) vers les cuisines centrales ou les lieux de restauration collective, tandis que ce sont les chariots de manutentions qui sont transportés à vide lors du trajet allant des cuisines centrales ou des lieux de restauration collective vers le site de nettoyage et de stockage (matériel sale).

En effet, les socles rouleurs sont adaptés spécifiquement aux dimensions des caisses filaires, tandis que les chariots de manutention sont adaptés spécifiquement aux dimensions des bacs et des couvercles. Par conséquent, les socles rouleurs présentent des dimensions trop grandes pour assurer le transport des bacs et des couvercles de manière stable, tandis que les chariots de manutention présentent des dimensions trop petites pour recevoir les caisses filaires.

Un inconvénient est que les quantités de matériel à transporter entre les sites de nettoyage et de stockage, les cuisines centrales et les lieux de restauration collectives sont alors relativement importantes, ce qui impose de mobiliser un grand nombre de moyens de transport ou bien de recourir à un grand nombre de déplacements. De plus, les caisses palettes sont très lourdes et encombrantes et influent négativement sur la consommation des moyens de transport. Cela soulève donc également des préoccupations écologiques.

### EXPOSÉ DE L'INVENTION

La présente invention vise à remédier à tout ou partie des inconvénients de l'état de la technique cités ci-dessus.

À cet effet, l'invention vise un système de transport d'équipements, comprenant un chariot porteur et des équipements présentant des dimensions différentes, à savoir un premier équipement et un deuxième équipement, le deuxième équipement comprenant un réceptacle adapté pour loger le premier équipement, le chariot porteur comprenant des roues et un châssis pourvu d'un organe de calage, le premier équipement et le deuxième équipement étant pourvus respectivement d'un premier organe de positionnement et d'un deuxième organe de positionnement configurés chacun pour coopérer avec l'organe de calage du chariot porteur par engagement par complémentarité de formes de sorte à immobiliser l'un du premier équipement et du deuxième équipement sur le chariot porteur dans une position déterminée; le chariot porteur étant ainsi configuré pour transporter, sélectivement, le premier équipement, le deuxième équipement, ainsi que le premier équipement et le deuxième équipement lorsque le premier équipement est logé dans le réceptacle du deuxième équipement.

Dans le système de transport selon l'invention, le deuxième équipement est adapté pour loger, et par exemple recevoir entièrement le premier équipement, y compris donc le premier organe de positionnement. Le deuxième équipement présente donc des dimensions supérieures aux dimensions hors tout du premier équipement.

Le premier équipement peut être positionné et maintenu immobile (ou calé) sur le chariot porteur grâce à la coopération du moyen de calage et du premier organe de positionnement par complémentarité de formes. Le deuxième équipement peut lui aussi être positionné et maintenu immobile (ou calé) sur le chariot porteur grâce à la coopération du même moyen de calage et du deuxième organe de positionnement par complémentarité de formes.

Le système de transport permet ainsi de transporter sélectivement, de manière stable et sécuritaire, deux équipements de dimensions différentes à l'aide d'un unique chariot porteur. Dit autrement, le chariot porteur permet de transporter de manière stable et sécurisée aussi bien le premier équipement que le deuxième équipement, bien que ces équipements soient de dimensions différentes. Il n'est alors plus nécessaire d'utiliser des chariots adaptés spécifiquement à chaque équipement. En effet, le premier équipement et le deuxième équipement peuvent être transportés de manière stable et sécuritaire par un même chariot. En ce sens, la quantité de matériel à transporter entre les sites de nettoyage et de stockage, les cuisines centrales et les lieux de restauration collectives peut être considérablement réduite.

Le système de transport permet en outre de transporter simultanément le premier équipement et le deuxième équipement, avec le deuxième équipement qui est positionné et maintenu sur le chariot porteur par la coopération du moyen de calage et du deuxième organe de positionnement, et avec le premier équipement qui est logé dans le réceptacle du deuxième équipement.

Le système de transport offre donc une grande modularité de transport tout en ayant un unique chariot porteur, rendant ainsi le transport des équipements relativement simple et peu encombrant.

Des caractéristiques préférées, simples, commodes et économiques du système de transport selon l'invention sont présentées ci-après.

Le premier organe de positionnement et le deuxième organe de positionnement peuvent avoir des dimensions identiques.

L'organe de calage peut présenter une forme en creux, tandis que le premier organe de positionnement du premier équipement et le deuxième organe de positionnement du deuxième équipement peuvent présenter une forme en relief.

Inversement, l'organe de calage peut présenter une forme en relief, tandis que le premier organe de positionnement du premier équipement et le deuxième organe de positionnement du deuxième équipement peuvent présenter une forme en creux.

L'organe de calage peut être défini par un organe de maintien vertical sur lequel le premier organe de positionnement du premier équipement et le deuxième organe de positionnement du deuxième équipement sont configurés pour reposer, et un organe de maintien horizontal configuré pour empêcher le déplacement du premier équipement ou du deuxième équipement lorsque le premier organe de positionnement ou le deuxième organe de positionnement repose sur l'organe de maintien vertical.

Le réceptacle dudit deuxième équipement peut comporter une paroi de fond et des parois latérales définissant un volume de réception interne adapté pour loger le premier équipement, ladite paroi de fond ayant une face interne tournée vers le volume de réception interne et une face externe opposée à la face interne, le deuxième organe de positionnement étant disposé en saillie sur la face externe de la paroi de fond.

La paroi de fond peut recouvrir au moins partiellement l'organe de maintien horizontal lorsque le deuxième organe de positionnement coopère avec l'organe de calage du chariot porteur.

L'organe de maintien horizontal peut comporter plusieurs cales espacées les unes des autres.

Les cales peuvent être agencées par paire, chaque paire de cales étant disposée de manière symétrique par rapport à un plan passant par un centre de l'organe de calage.

L'organe de calage peut être un logement, le châssis du chariot porteur définissant une cavité s'étendant entre une paroi de fond du châssis et ledit logement, ledit logement étant ouvert sur ladite cavité.

Le châssis peut être pourvu d'une encoche débouchant dans la cavité pour permettre à un utilisateur du système de transport de saisir le premier équipement ou le deuxième équipement lorsque le premier organe de positionnement ou le deuxième organe de positionnement coopère avec l'organe de calage du chariot porteur.

Le deuxième organe de positionnement peut être centré sur la paroi de fond du deuxième équipement.

Le premier équipement peut comporter un rebord périphérique formant au moins partiellement le premier organe de positionnement.

Le premier équipement peut comprendre au moins un bac et/ou au moins un couvercle.

Le deuxième organe de positionnement peut être formé par un fil métallique plié

Le chariot porteur peut comporter un organe d'empilement et un organe d'empilement complémentaire, configurés pour permettre l'empilement du chariot porteur avec au moins un autre chariot porteur du même type de sorte que les roues du chariot porteur qui se trouve au-dessus sont à distance de l'organe de calage du chariot porteur qui se trouve en-dessous.

### BRÈVE DESCRIPTION DES FIGURES

D'autres avantages, buts et caractéristiques particulières de la présente invention ressortiront de la description non limitative qui suit d'au moins un mode de réalisation particulier des dispositifs et procédés objets de la présente invention, en regard des dessins annexés.
La figure 1 représente schématiquement, selon une vue en perspective éclatée, un système de transport d'équipements selon un mode de réalisation de l'invention.
La figure 2 représente, selon une vue en perspective, le système de transport de la figure 1.
La figure 3 est une vue similaire à la figure 2, montrant le chariot porteur du système de transport des figures 1 et 2 portant un des équipements.
La figure 4 est une vue similaire à la figure 2, montrant le chariot porteur du système de transport des figures 1 et 2 portant un autre des équipements.
La figure 5, la figure 6 et la figure 7 représentent de manière isolée le chariot porteur du système de transport d'équipements des figures 1 et 2.
La figure 8 et la figure 9 représentent deux chariots porteurs, identiques à celui des figures 5 à 7, empilés l'un sur l'autre.
La figure 10 et la figure 11 montrent le chariot porteur des figures 5 à 7 sur lequel est montée une poignée.
La figure 12 et la figure 13 représentent de manière isolée un premier équipement du système de transport d'équipements des figures 1 et 2.
La figure 14 est une vue de détail montrant la coopération entre le premier équipement et le chariot de transport du système de transport des figures 1 et 2.
La figure 15 et la figure 16 représentent de manière isolée un deuxième équipement du système de transport d'équipements des figures 1 et 2.
La figure 17 représente deux deuxièmes équipements, identiques à celui des figures 15 et 16, empilés l'un sur l'autre.
La figure 18 est une vue de détail montrant la coopération entre le deuxième équipement et le chariot de transport du système de transport des figures 1 et 2.

### DESCRIPTION DÉTAILLÉE DE L'INVENTION

Comme indiqué précédemment, l'invention porte de manière générale sur un système de transport d'équipements, tels que des équipements dits « réemployables ». L'invention n'est toutefois pas limitée à un type d'équipements particuliers.

L'invention se propose de fournir un système de transport configuré pour caler individuellement sur un même chariot porteur deux équipements présentant des dimensions différentes, l'un des équipements étant adapté à loger l'autre des équipements.

Pour ce faire, l'invention met en œuvre un système de transport comprenant un chariot porteur et des équipements de dimensions différentes, l'un de ces équipements comprenant un réceptacle adapté à recevoir l'autre des équipements. Le chariot porteur comprend un châssis et des roues. Le châssis comprend un moyen de calage et chacun des équipements comprend un organe de positionnement configuré pour coopérer avec le moyen de calage du chariot porteur via un engagement par complémentarité de formes, de sorte à immobiliser l'équipement sur le chariot porteur dans une position déterminée.

Comme expliqué ci-après, il est ainsi possible d'utiliser un unique chariot porteur pour transporter de manière stable et sécuritaire des équipements de différentes dimensions, rendant ainsi le transport de ces équipements relativement simple, fiable et peu encombrant.

De plus, puisque l'un des équipements peut être logé dans l'autre des équipements, le système de transport est hautement modulable. En effet, le système de transport peut admettre première configuration dans laquelle l'un des équipements est calé sur le chariot porteur, une deuxième configuration dans laquelle l'autre équipement est calé sur le chariot porteur, et une troisième configuration dans laquelle l'un des équipements est calé sur le chariot porteur et loge l'autre des équipements.

Dans ce document, un exemple de mise en oeuvre de l'invention est décrit dans le cadre d'un système de transport destiné à la distribution de nourriture dans des lieux de restauration collective, où l'un des équipements est destiné à loger l'autre des équipements et cet autre équipement est destiné à stocker de la nourriture en vue de sa distribution. L'invention ne se limite toutefois pas au seul exemple de réalisation décrit ci-après et peut s'appliquer plus généralement à un système de transport configuré pour transporter des équipements de dimensions différentes de manière stable, simple et peu encombrante.

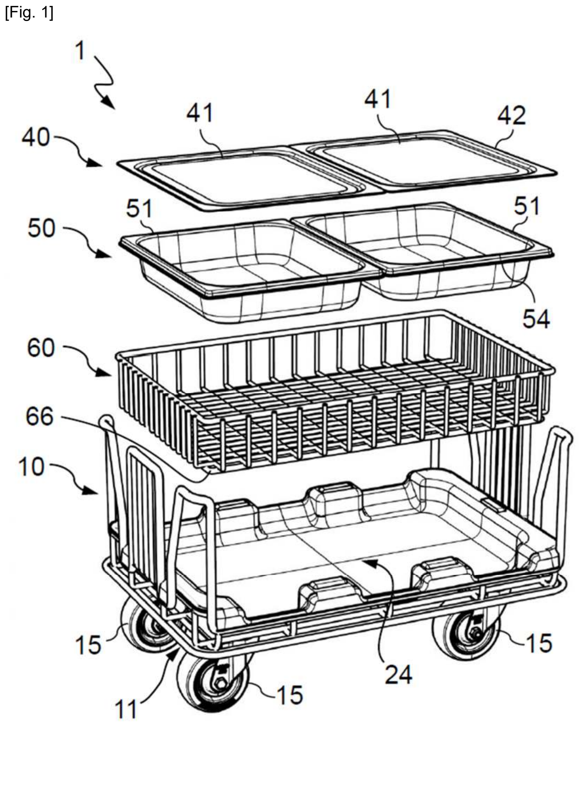

Les figures 1 à 4 représentent un système de transport 1 selon un mode de réalisation particulier de l''invention. Comme illustré sur cette figure, le système de transport 1 comprend un chariot porteur 10, deux premiers équipements 40, 50 et un deuxième équipement 60.

Le deuxième équipement 60 est configuré pour loger au moins un des deux premiers équipements 40, 50. En particulier, le deuxième équipement 60 comprend un réceptacle présentant un volume interne de réception adapté à recevoir au moins une partie des premiers équipements 40, 50. Le volume interne de réception peut être supérieur à un volume hors tout d'au moins un des premiers équipements, de sorte que les premiers équipement 40, 50 sont logés 54rement dans le deuxième équipement 60. Les premiers équipements 40, 50 peuvent ainsi être transportés à l'intérieur du deuxième équipement 60, comme cela est représenté à la figure 2.

De fait, les premiers équipements 40, 50 ont des dimensions inférieures aux dimensions du deuxième équipement 60. Autrement dit, le volume hors tout des premiers équipements 40, 50 est inférieur au volume hors tout du deuxième équipement 60. Il existe donc une difficulté pour transporter individuellement les premiers équipements 40, 50 et le deuxième équipement 60 sur un même chariot porteur, à tout le moins de manière stable et sécuritaire.

Le chariot porteur 10 comporte des roues 15 et un châssis 14. Le châssis 14 est pourvu d'un organe de calage 24. Chaque premier équipement 40, 50 est pourvu d'un premier organe de positionnement respectif 42, 54, tandis que le deuxième équipement 60 est pourvu d'un deuxième organe de positionnement 66.

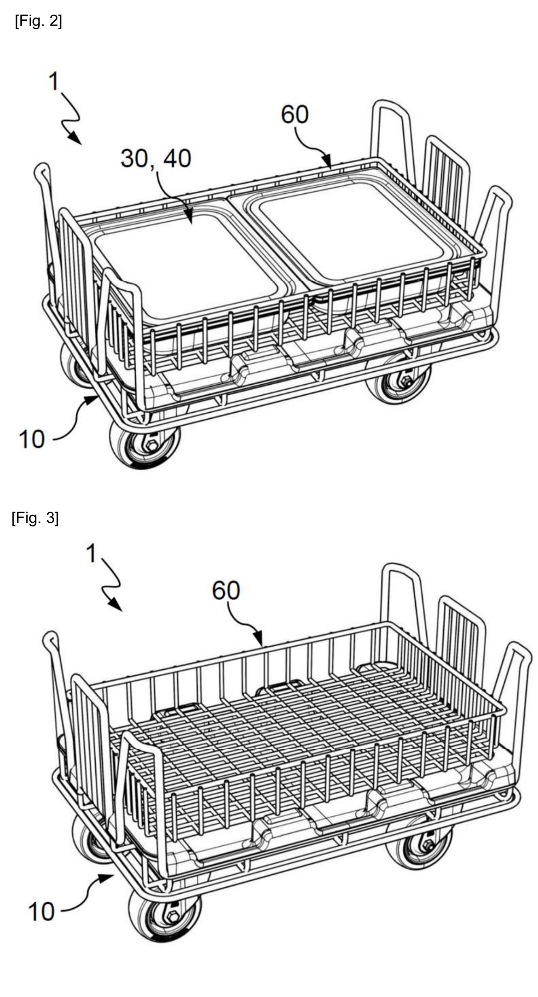

Le deuxième organe de positionnement 66 est configuré pour coopérer avec l'organe de calage 24 du chariot porteur 10 par complémentarité de formes, de sorte à immobiliser le deuxième équipement 60 dans une position déterminée. Le deuxième équipement 60 peut ainsi être transporté par le chariot porteur 10 de manière stable et sécuritaire, en logeant ou non les premiers équipements 40, 50, comme cela est représenté respectivement sur les figures 2 et 3.

Le deuxième équipement 60 peut être configuré pour loger par complémentarité de formes les premiers équipements 40, 50 de sorte à les immobiliser dans une position déterminée. Ainsi, les premiers équipements 40, 50 ne se déplacent pas, ou très peu, dans le deuxième équipement, ce qui est avantageux par exemple lorsque les premiers équipements sont fragiles ou transportent des éléments fragiles.

Dans la configuration représentée à la figure 2, le système de transport 1 permet de transporter les premiers équipements 40, 50 et le deuxième équipement 60 simultanément à l'aide du chariot porteur 10, et de manière relativement compacte du fait que les premiers équipements 40, 50 sont logés dans le deuxième équipement 60. Bien entendu, les premiers équipements 40, 50 peuvent être substitués par d'autres équipements de dimensions différentes selon l'application.

On notera que les premiers organes de positionnement 42, 54 des premiers équipements 40, 50 sont également logés dans le deuxième équipement 60.

Les premiers organes de positionnement 42, 54 sont, eux aussi, configurés chacun pour coopérer avec l'organe de calage 24 du chariot porteur 10 par complémentarité de formes, de sorte à immobiliser l'un des premiers équipements 40, 50 dans une position déterminée. Les premiers équipements 40, 50 peuvent ainsi être transportés, individuellement ou ensemble, sur le chariot porteur 10 de manière stable et sécuritaire.

On notera également que la position déterminée dans laquelle les premiers équipements 40, 50 sont immobilisés sur le chariot porteur 10 est la même que celle dans laquelle les premiers équipements 40, 50 sont logés dans le deuxième équipement 60. En d'autres termes, le deuxième équipement 60 est configuré pour loger les premiers équipements 40, 50 dans la même position déterminée que celle dans laquelle les premiers équipements 40, 50 sont immobilisés sur le chariot porteur 10.

L'organe de calage 24 du chariot porteur 10 est ainsi configuré pour coopérer à la fois avec les premiers organes de positionnement 42, 54 des premiers équipements 40, 50 et avec le deuxième équipement 60 par complémentarité de formes de sorte à les immobiliser, sélectivement, sur le chariot porteur 10 dans une position déterminée, bien que les premiers équipements 40, 50 et le deuxième équipement 60 soient de dimensions différentes.

Chacun des premiers équipements 40, 50 et du deuxième équipement 60 peut ainsi être transporté de manière stable et sécuritaire par un unique chariot porteur 10, ce qui permet de limiter la quantité de matériel pour le transport de ces équipements.

Dans l'exemple représenté, l'organe de calage 24 présente une forme en creux, tandis que le premier organe de positionnement 42, 54 et le deuxième organe de positionnement 66 présentent chacun une forme en relief.

En particulier, comme le système de transport 1 est ici destiné à la distribution de nourriture dans des lieux de restauration collective, l'un des premiers équipements 50 est formé par deux bacs en acier inoxydable 51 tandis que l'autre des premiers équipements 40 est formé par deux couvercles en acier inoxydable 41, chacun étant configuré pour refermer l'un des bacs 51. Le deuxième équipement est formé par une caisse filaire 60 adaptée pour loger les deux bacs 51 et/ou les deux couvercles 41, par exemple lorsque ces derniers sont sales, c'est-à-dire après avoir stocké de la nourriture.

L'un des premiers organes de positionnement 42, 54 est formé par une partie des rebords périphériques des couvercles 41 tandis que l'autre des premiers organes de positionnement 42, 54 est formé par une partie des rebords périphériques des bacs 51. Le deuxième organe de positionnement 66 est formé par un premier fil métallique plié.

L'invention n'est toutefois pas limitée à ces équipements, ni à ces organes de positionnement. Par exemple, le premier équipement peut être formé par un unique bac et/ou par un unique couvercle. Plus généralement, d'autres types d'équipements et d'organes de positionnement peuvent être envisagés selon l'application du système de transport.

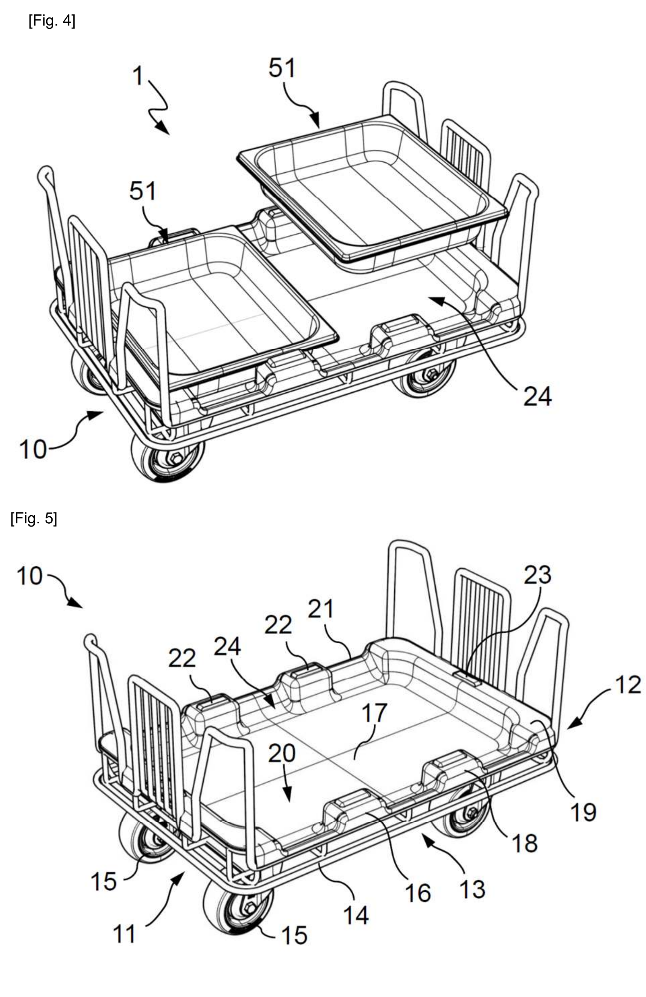

Les figures 5 à 11 représentent de manière isolée le chariot porteur 10 du système de transport 1 des figures 1 à 4.

Le chariot porteur 10 présente un côté avant 11, un côté arrière 12 opposé au côté avant 11 et des côtés latéraux 13 opposés et reliant chacun le côté avant 11 au côté arrière 12.

Comme indiqué précédemment, le chariot porteur 10 comprend un châssis 14 et des roues 15, fixées au châssis, et ici au nombre de quatre, réparties par paire.

Le châssis 14 est globalement en forme de plateau. Dans l'exemple représenté, le châssis 14 comprend une structure en treillis de tiges métalliques soudées à leurs intersections ainsi qu'une plaque de protection 16 recouvrant la structure en treillis pour éviter que des saletés projetées par les roues 15 contaminent la nourriture placée sur le chariot porteur 10.

La plaque de protection 16 comprend une face de fond 17, une bordure périphérique 18 s'étendant à la périphérie et en saillie de la face de fond 17, et des cales 22, 23 disposées en saillie sur une face supérieure 19 de la bordure périphérique 18.

Les cales 22, 23 définissent entre elles, et avec la face supérieure 19 de la bordure périphérique 18, un logement 24 configuré pour coopérer avec les premiers organes de positionnement 42, 54 des premiers équipements 40, 50 et avec le deuxième organe de positionnement 66 du deuxième équipement 60 de sorte à immobiliser l'un des premiers équipements 40, 50 et du deuxième équipement 60 sur le chariot porteur 10 dans une position déterminée. Le logement 24 constitue donc un organe de calage au sens de l'invention.

Certaines cales 22 sont disposées le long des côtés latéraux 13, tandis que d'autres cales 23 sont disposées le long des côtés avant 11 et arrière 12, de sorte à immobiliser les premiers équipements 40, 50 ou le deuxième équipement 60 latéralement, c'est-à-dire le long de la face supérieure 19 de la bordure périphérique 18. En particulier, les cales 22, 23 sont agencées par paire, chaque paire de cales étant disposée de manière symétrique par rapport à un plan passant par un centre du logement 24.

Dans l'exemple représenté, les cales 22, 23 sont espacées les unes des autres. Il est toutefois envisageable que le chariot porteur comporte une unique cale, s'étendant de manière continue, délimitant au moins partiellement le logement.

La bordure périphérique 18 définit une cavité 20 et est pourvue d'encoches 21 débouchant dans la cavité 20 pour permettre à un utilisateur du système de transport 1 de saisir les premiers équipements 40, 50 ou le deuxième équipement 60 lorsque cet équipement est immobilisé sur le chariot porteur 10. Dans l'exemple représenté, les encoches 21 sont ménagées dans la bordure périphérique 18 au niveau de chaque côté latéral 13 et présentent une forme globalement carrée, conférant à la bordure périphérique 18 une forme en créneaux. D'autres formes que des encoches peuvent être envisagées pour permettre la saisie d'un équipement lorsqu'il est immobilisé sur le chariot. De manière générale, une ouverture débouchant dans la cavité suffit à permettre à un utilisateur de saisir l'un des équipements.

La plaque de protection 16 est optionnelle. Ainsi, la face de fond 17, la bordure périphérique 18 et les cales 22, 23 peuvent être formées par la structure en treillis ou bien par toute autre structure formant le châssis 14 du chariot porteur 10.

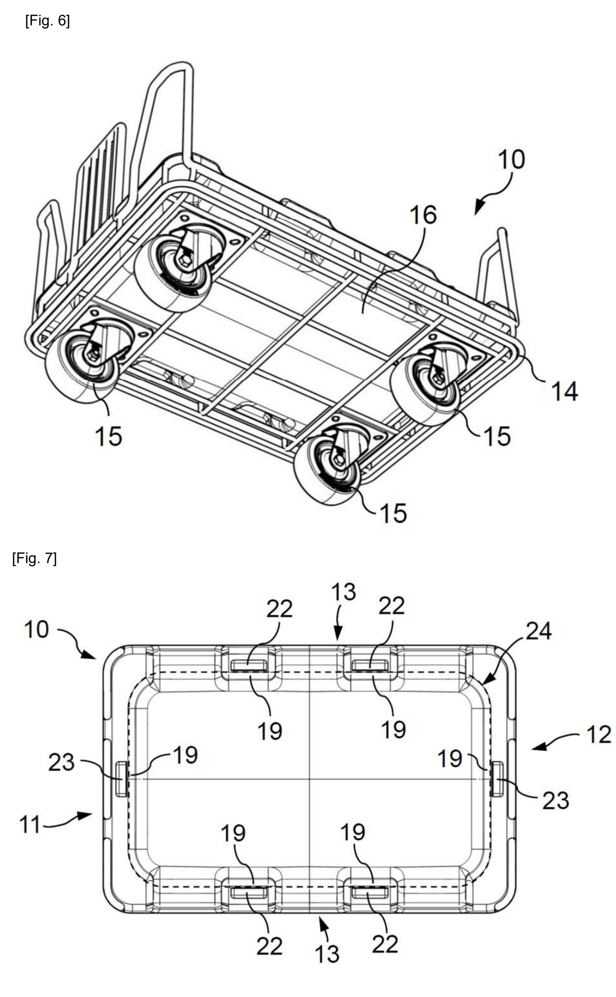

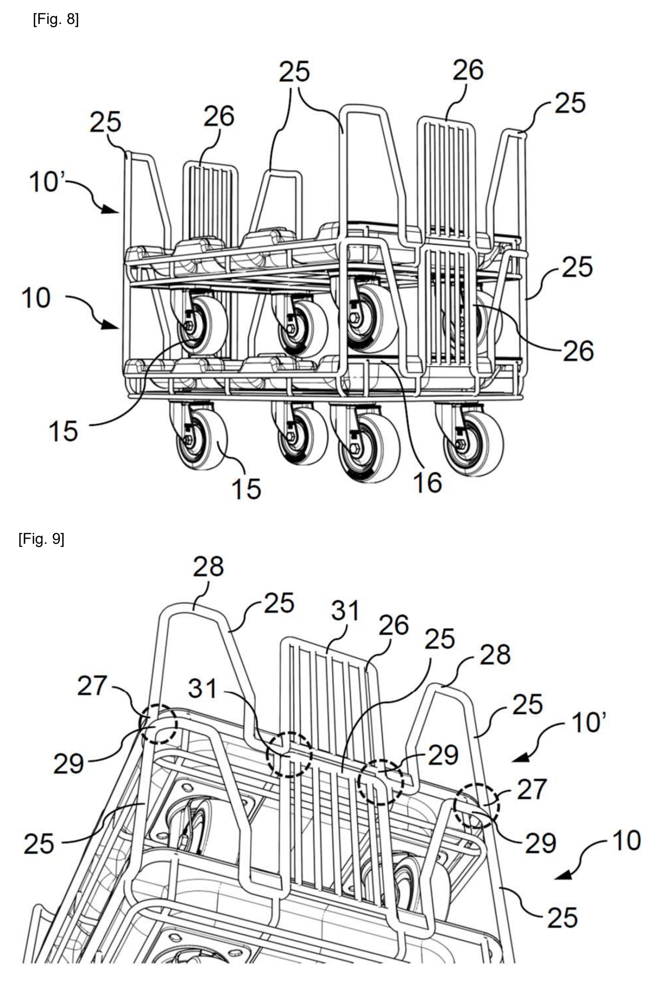

En référence aux figures 8 et 9, le châssis 14 comprend en outre des premiers montants 25 et des deuxièmes montants 26 s'étendant en saillie depuis la structure en treillis.

Comme illustré sur la figure 9, les premiers montants 25, comportent chacun une partie inférieure 27 située du côté du châssis 14 et une partie supérieure 28 formant une extrémité distale des premiers montants 25 par rapport aux châssis 14. La partie inférieure 27 et la partie supérieure 28 sont configurées pour permettre l'empilement du chariot porteur 10 avec au moins un autre chariot porteur 10' du même type, de sorte que les roues 15 du chariot porteur 10' qui se trouve au-dessus sont à distance de la plaque de protection 16 du chariot porteur 10 qui se trouve en-dessous. Cette configuration permet de transporter une pluralité de chariots porteurs 10, 10' de manière compacte, en les empilant, tout en garantissant un bon niveau d'hygiène en évitant le contact entre les roues, pouvant porter des saletés du fait de leur contact répété avec le sol, et la plaque de protection, recevant les équipements.

En particulier, la partie supérieure 28 de chaque premiers montants 25 du chariot porteur 10 se trouvant en-dessous est configurée pour venir en appui contre la partie inférieure de premiers montants correspondants du chariot porteur 10' se trouvant au-dessus, de sorte à immobiliser le chariot porteur 10' se trouvant au-dessus sur le chariot porteur 10 se trouvant en dessous dans une configuration empilée dans laquelle les roues du chariot porteur 10' ne touchent pas la plaque de protection 16 du chariot porteur 10 qui se trouve en dessous.

Les premiers montants 25 sont ici au nombre de quatre et sont disposés à chaque coin du chariot porteur 10 pour garantir une bonne stabilité de l'empilement des chariots porteurs 10, 10'.

Les deuxièmes montants 26 comportent également chacun une partie inférieure 29 située du côté du châssis 14 et une partie supérieure 31 formant une extrémité distale des deuxièmes montants 26 par rapport aux châssis 14. La partie inférieure 29 et la partie supérieure 31 sont configurées pour permettre l'empilement du chariot porteur 10 avec au moins un autre chariot porteur 10' du même type, de sorte que les roues 15 du chariot porteur 10' qui se trouve au-dessus sont à distance de la plaque de protection 16 du chariot porteur 10 qui se trouve en-dessous.

En particulier, la partie supérieure 31 de chaque deuxièmes montants 26 du chariot porteur 10 se trouvant en-dessous est configurée pour venir en appui contre la partie inférieure de premiers montants correspondants du chariot porteur 10' se trouvant au-dessus, de sorte à immobiliser le chariot porteur 10' se trouvant au-dessus sur le chariot porteur 10 se trouvant en dessous dans une configuration empilée dans laquelle les roues du chariot porteur 10' ne touchent pas la plaque de protection 16 du chariot porteur 10 qui se trouve en dessous.

Les zones de contact entre les premiers montants 25 et les deuxièmes montants 26 des chariots porteurs 10, 10' sont indiquées par des cercles en ligne pointillée sur la figure 9.

Les deuxièmes montants 26 sont ici au nombre de deux et sont disposés l'un sur le côté avant 11 du chariot porteur 10, entre des premiers montants 25 et l'autre sur le côté arrière 12 entre d'autres premiers montants 25. Les deuxièmes montants 26 ne sont pas nécessaires pour l'empilement des chariots porteurs, mais améliorent la stabilité de l'empilement et réduisent le risque de chute.

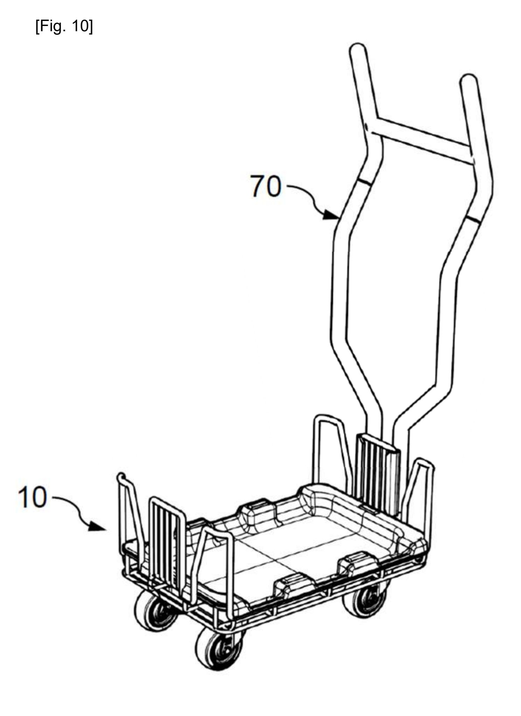

Comme illustré sur les figures 10 et 11, le chariot porteur 10 peut comprendre une poignée 70, ou un timon, pour permettre à un utilisateur du système de transport 1 de tirer ou de pousser le chariot porteur 10 dans une direction souhaitée.

Dans l'exemple représenté, la poignée 70 est montée sur le châssis 14 du chariot porteur 10 de manière amovible. La poignée 70 peut être fixe ou articulée par rapport au châssis 14. La poignée 70 comporte ici deux bras s'étendent globalement parallèlement l'un à l'autre, mais d'autres types de poignées bien connues de la personne du métier peuvent bien entendu être envisagées.

La poignée 70 comporte un organe de montage 72 configuré pour coopérer avec l'un des deuxièmes montants 26 pour le montage de la poignée sur le châssis 14 du chariot porteur 10.

L'organe de montage 72 est ici configuré pour s'engager, à coulissement, sur le deuxième montant 26 du châssis 14, suivant une direction d'engagement allant de la partie supérieure 31 du deuxième montant 26 vers sa partie inférieure 29 jusqu'à venir en butée contre le châssis 14. Pour ce faire, l'organe de montage 72 présente par exemple un profil en forme de C, configuré pour former une liaison glissière avec le deuxième montant 26.

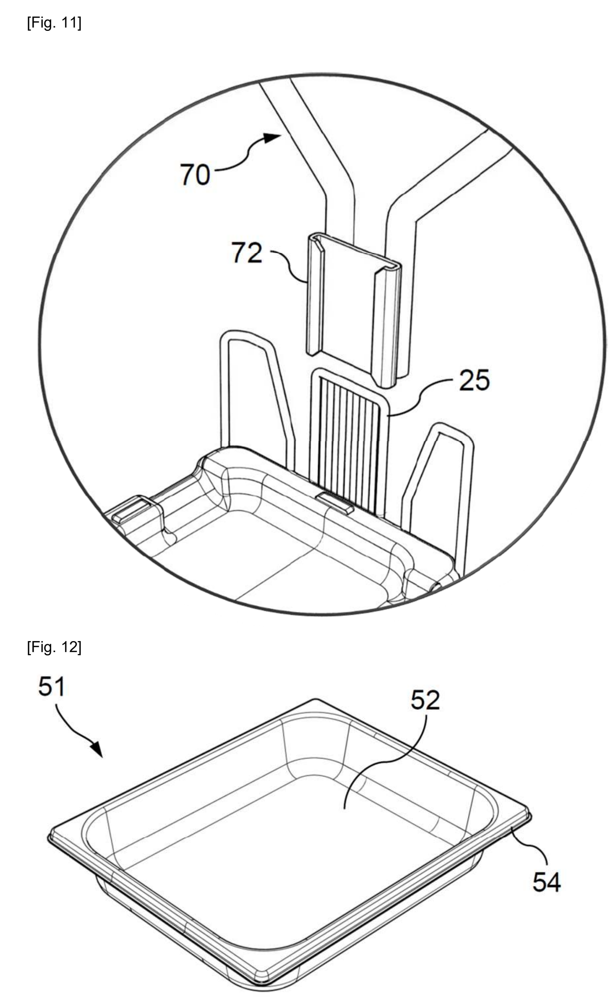

Les figures 12 à 14 représentent de manière isolée un bac 51, formant ici partiellement le premier équipement 50 du système de transport 1 de la figure 1.

Chaque bac 51 comprend une partie de réception 52 et un rebord 54, globalement plan, s'étendant en saillie depuis la partie de réception 52 pour permettre à un utilisateur de porter le bac ou bien de reposer le bac sur des rails. La partie de réception 52 s'étend selon une direction globalement perpendiculaire au rebord 54.

Dans l'exemple illustré à la figure 1, le premier équipement 50 est formé par deux bacs 51 juxtaposés, de sorte à former un contour externe de forme globalement rectangulaire défini par les rebords 54 des bacs.

Ce contour externe défini par les rebords 54 des bacs 51 est configuré pour coopérer avec l'organe de calage 24 du chariot porteur 10 par complémentarité de formes de sorte à immobiliser les bacs 51 dans une position déterminée, qui correspond ici à la configuration représentée aux figures 1 et 2 dans laquelle les bacs 51 sont juxtaposés. En juxtaposant les bacs 51, ou disposant leur rebord l'un contre l'autre, le jeu les séparant est limité et les bacs 51 restent sensiblement immobiles sur le chariot porteur 10, même lorsque ce dernier est déplacé.

Le premier organe de positionnement 54 est ainsi formé par ce contour externe défini par les rebords 54 des bacs 51 juxtaposés. Les rebords 54 des bacs 51 qui sont juxtaposés, ou l'un contre l'autre, ne définissent pas le premier organe de positionnement 54.

Le rebord 54 de chaque bac 51 est ainsi configuré pour occuper dans une partie seulement du logement 24 du chariot porteur 10. Comme les bacs 51 sont ici identiques, chaque rebord 54 est configuré pour occuper la moitié du logement 24 chariot porteur 10.

Les bacs 51 peuvent bien entendu être de dimensions différentes, tant que les rebords 54 coopèrent par complémentarité de formes avec le logement 24 du chariot porteur 10 lorsque les bacs sont juxtaposés. Le nombre de bacs 51 peut également varier. Selon un exemple non représenté, le premier équipement peut être formé par plus de deux bacs. Selon un autre exemple non représenté, le premier équipement peut est formé par un seul bac, dont le rebord est configuré pour coopérer par complémentarité de formes avec le logement du chariot porteur.

Dans l'exemple représenté, le rebord 54 de chaque bac 51 s'étend de manière continue à la périphérie de la partie de réception 52. Le rebord peut toutefois s'étendre de manière discontinue à la périphérie de la partie de réception. Autrement dit, le rebord peut être formé par plusieurs éléments espacés les uns des autres disposés à la périphérie de la partie de réception.

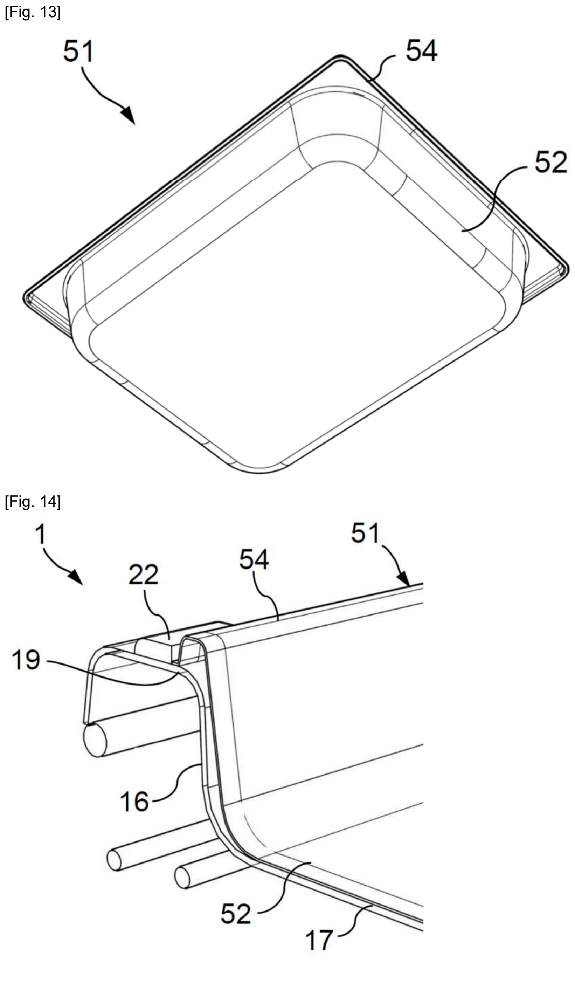

La figure 14 montre plus en détail la coopération par complémentarité de formes entre le rebord 54 d'un des bacs 51 et le logement 24 du chariot porteur 10. Le rebord 54 de chaque bac 51 est en appui sur la face supérieure 19 de la bordure périphérique 18 du chariot porteur 10, et disposé entre les cales 22, 23, bien qu'elles ne soient pas toutes représentées ici, de sorte que les bacs 51 sont immobilisés dans une position déterminée sur le chariot porteur 10.

Le mouvement du bac 51 le long de la face supérieure 19 est limité par les cales 22, 23. La distance entre le rebord 54 et les cales 22, 23 est de préférence choisie la plus faible possible pour limiter le déplacement du bac 51 sur le chariot porteur 10, par exemple lorsque ce dernier accélère, ralentit ou tourne.

Le châssis 14 est configuré pour qu'en position de fonctionnement du chariot porteur 10, représentée sur les figures 1 à 4, le bac 51 est maintenu en appui sur la face supérieure 19 par gravité. La hauteur des cales 22, 23, définie suivant une direction sensiblement perpendiculaire à la face supérieure 19, est choisie de sorte à empêcher qu'un rebord 54 ne passe au-dessus des cales. La face des cales 22, 23 qui est en regard, ou en contact, avec le rebord 54 est de préférence sensiblement perpendiculaire à la face supérieure 19 pour éviter un glissement du rebord sur cette face.

Ainsi, la face supérieure 19 de la bordure périphérique 18 constitue un organe de maintien vertical sur lequel le rebord 54 de chaque bac 51 est configuré pour reposer, tandis que les cales 22, 23 constituent un organe de maintien horizontal configuré pour empêcher le déplacement des bacs 51 lorsque les rebords 54 reposent sur la face supérieure 19.

La partie de réception 52 des bacs 51 est reçue dans la cavité 20 et se trouve à distance de la face de fond 17 du châssis 14 pour garantir que le rebord 54 de chaque bac 51 soit en appui sur la face supérieure 19 de la bordure périphérique 18.

Les figures 15 à 18 représentent de manière isolée la caisse filaire 60, formant ici le deuxième équipement du système de transport 1 de la figure 1.

La caisse filaire 60 comprend une paroi de fond 61 et des parois latérales 62 reliées entre elles et s'étendant depuis la paroi de fond 61 pour définir un volume de réception interne 63, ainsi qu'une ouverture définie par les parois latérales 62 en regard de la paroi de fond, pour accéder au volume de réception interne. Dans l'exemple représenté, la caisse filaire 60 comprend une structure en treillis de tiges métalliques soudées à leurs intersections.

Le volume de réception interne 63 est adapté pour loger, par exemple entièrement, les bacs 51, au moins lorsqu'ils sont dans la position déterminée dans laquelle ils coopèrent par complémentarité de formes avec le logement 24 du chariot porteur 10, représentée sur les figures 1 et 2. Dit autrement, le volume de réception interne 63 de la caisse filaire 60 est supérieur au volume hors tout des bacs 51 dans la position déterminée mentionnée précédemment. Les bacs 51 peuvent ainsi être reçus dans le volume de réception interne 63 sans dépasser de la caisse filaire 60 à travers l'ouverture.

Le premier fil métallique plié 66 est configuré pour coopérer avec l'organe de calage 24 du chariot porteur 10 par complémentarité de formes de sorte à immobiliser la caisse filaire 60 dans une position déterminée, qui correspond ici à la configuration représentée aux figures 1 et 2 dans laquelle la paroi de fond 61 est du côté du chariot porteur 10. Le deuxième organe de positionnement est ainsi formé par le premier fil métallique plié 66.

La paroi de fond 61 présente une face interne 64 tournée vers le volume de réception interne 63 et une face externe 65 opposée à la face interne 64. La face externe 65 est tournée vers le chariot porteur 10 dans la configuration mentionnée précédemment. Le premier fil métallique plié 66 est disposé en saillie sur la face externe 65 de la paroi de fond 61 de la caisse filaire 60. Ainsi, lorsque le premier fil métallique plié 66 coopère avec le logement 24 du chariot porteur 10, l'ouverture est orientée vers le haut et les bacs 51 sont maintenus dans la caisse filaire 60 par les parois latérales 62, par exemple lorsque le chariot porteur 10 accélère, ralentit ou tourne.

De plus, la disposition du premier fil métallique plié 66 en saillie sur la face externe 65 de la paroi de fond 61 n'affecte pas le volume de réception interne 63. Autrement dit, le volume de réception interne 63, et plus généralement les dimensions de la caisse filaire 60, ne sont pas contraintes par les dimensions du premier fil métallique plié 66.

Dans l'exemple représenté, le premier fil métallique plié 66 s'étend manière continue et se referme sur lui-même en définissant ici une forme globalement rectangulaire. Le premier fil métallique plié peut toutefois s'étendre de manière discontinue, c'est-à-dire formé par plusieurs éléments espacés les uns des autres en saillie de la face externe 65 de la paroi de fond 61.

Le premier fil métallique plié 66 présente des dimensions similaires à celles du contour formé par les rebords 54 des bacs décrit précédemment. Le logement 24 est donc configuré pour coopérer avec le contour formé par les rebords 54 des bacs 51 et avec le premier fil métallique plié 66 sans aucun ajustement. Plus généralement, le chariot porteur 10 ne nécessite aucun réglage ou ajustement pour immobiliser les bacs 51 ou la caisse filaire 60 dans leur position déterminée respective, rend le système de transport 1 très simple d'utilisation.

La caisse filaire 60 comprend en outre un deuxième fil métallique plié 67 disposé sur les parois latérales 62 à l'intérieur du volume de réception interne 63 et configuré pour permettre l'empilement de la caisse filaire 60 avec au moins une autre caisse filaire 60' du même type. Cette configuration permet de transporter une pluralité de caisses filaires 60, 60', de manière stable et compacte.

En particulier, le deuxième fil métallique plié 67 définit un logement dans lequel le premier fil métallique plié 66 est configuré pour s'engager par complémentarité de formes. Les dimensions du premier fil métallique plié 66 sont donc légèrement inférieures à celles du deuxième fil métallique plié 67.

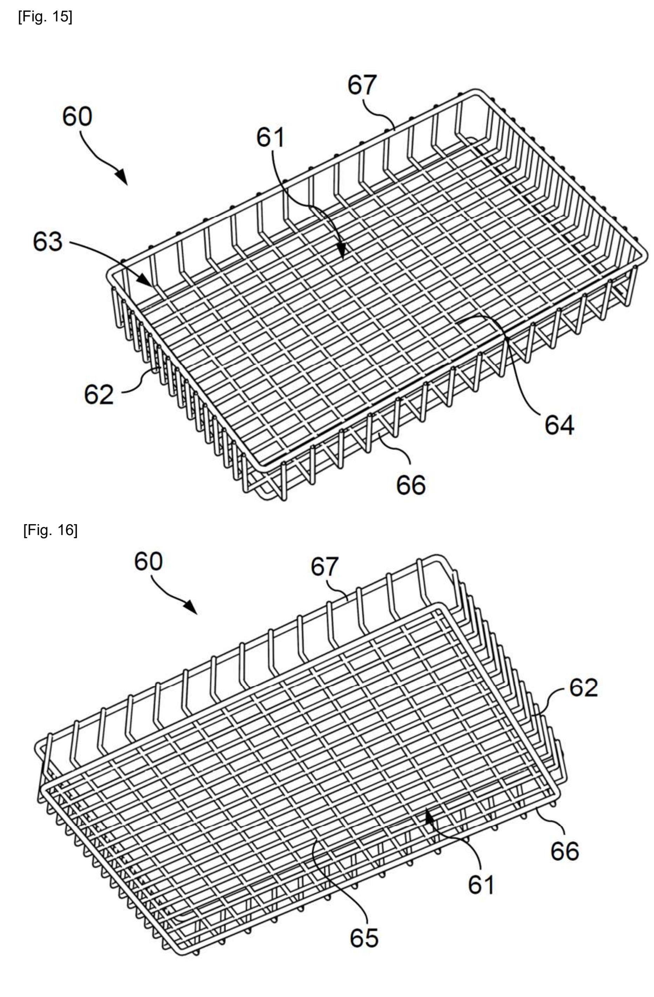

Dans la configuration empilée représentée à la figure 17, la paroi de fond 61 de la caisse filaire 60' située au-dessus est en appui contre les parois latérales 62 de la caisse filaire 60 située en-dessous pour maintenir le premier fil métallique plié 66 de la caisse filaire 60' située au-dessus dans le logement défini par le deuxième fil métallique plié 67 de la caisse filaire située en-dessous. La coopération entre le premier fil métallique plié 66 de la caisse filaire 60' située au-dessus et le deuxième fil métallique plié 67 de la caisse filaire 60 située en-dessous définit ainsi une liaison encastrement, assurant la stabilité de l'empilement.

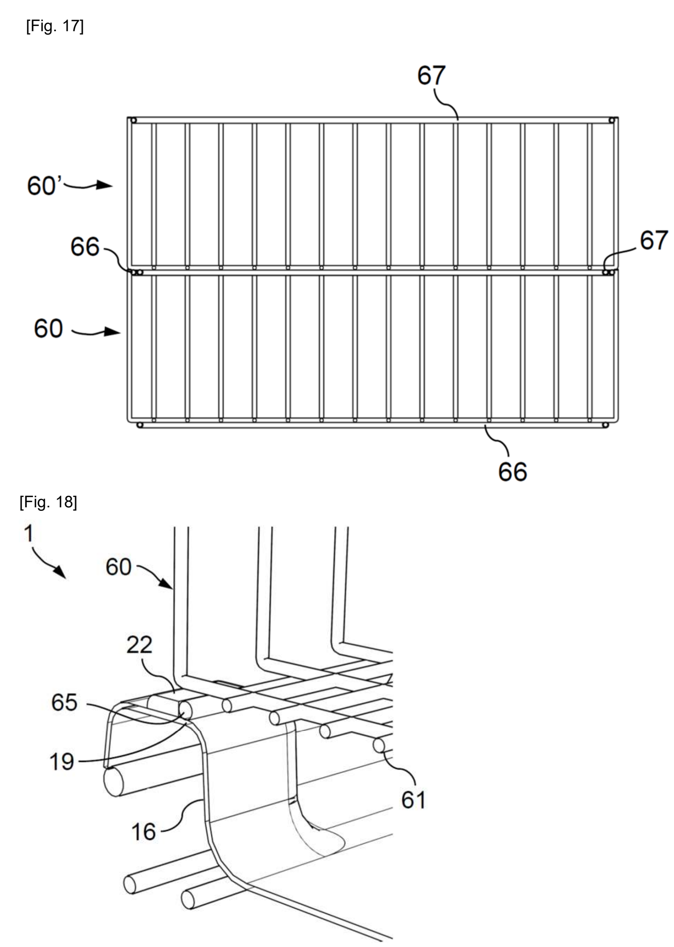

La figure 18 montre plus en détail la coopération par complémentarité de formes entre le premier fil métallique plié 66 de la caisse filaire 60 et le logement 24 du chariot porteur 10. Le premier fil métallique plié 66 est en appui sur la face supérieure 19 de la bordure périphérique 18 du chariot porteur 10, et disposé entre les cales 22, 23, bien qu'elles ne soient pas toutes représentées ici, de sorte que la caisse filaire 60 est immobilisée dans une position déterminée sur le chariot porteur 10.

Le mouvement de la caisse filaire 60 le long de la face supérieure 19 est limité par les cales 22, 23. La distance entre le premier fil métallique plié 66 et les cales 22, 23 est de préférence choisie la plus faible possible pour limiter le déplacement de la caisse filaire 60 sur le chariot porteur 10, par exemple lorsque ce dernier accélère, ralentit ou tourne.

Le châssis 14 est configuré pour qu'en position de fonctionnement du chariot porteur 10, représentée sur les figures 1 à 4, la caisse filaire 60 est maintenu en appui sur la face supérieure 19 par gravité. La hauteur des cales 22, 23, définie suivant une direction sensiblement perpendiculaire à la face supérieure 19, est choisie de sorte à empêcher que le premier fil métallique plié 66 ne passe au-dessus des cales. La face des cales 22, 23 qui est en regard, ou en contact, avec le premier fil métallique plié 66 est de préférence sensiblement perpendiculaire à la face supérieure 19 pour éviter un glissement du premier fil métallique plié 66 sur cette face.

Ainsi, la face supérieure 19 de la bordure périphérique 18 constitue un organe de maintien vertical sur lequel le fil métallique plié 66 de la caisse filaire 60 est configuré pour reposer, tandis que les cales 22, 23 constituent un organe de maintien horizontal configuré pour empêcher le déplacement de la caisse filaire 60 lorsque le fil métallique plié 66 repose sur la face supérieure 19.

La paroi de fond 61 de la caisse filaire 60 recouvre au moins partiellement une partie, ou la totalité, des cales 22, 23. En effet, la forme définie par le premier fil métallique plié 66 n'occupe qu'une partie de la paroi de fond 61 de la caisse filaire 60. Le premier fil métallique plié 66 est ici centré sur la paroi de fond 61 pour améliorer l'équilibre de la caisse filaire 60 sur le chariot porteur 10.

La paroi de fond 61 de la caisse filaire se trouve à distance de la face de fond 17 du châssis 14 pour garantir que le premier fil métallique plié 66 soit en appui sur la face supérieure 19 de la bordure périphérique 18.

De manière générale, les bacs 51 peuvent être positionnés et maintenus immobiles (ou calés) sur le chariot porteur grâce 10 à la coopération du logement 24 et des rebords 54 par complémentarité de formes. La caisse filaire 60 peut lui aussi être positionnée et maintenue immobile (ou calée) sur le chariot porteur 10 grâce à la coopération du même logement 24 et du fil métallique plié 66 par complémentarité de formes.

Le système de transport 1 permet ainsi de transporter sélectivement, de manière stable et sécuritaire, deux équipements 40, 50, 60 de dimensions différentes à l'aide d'un unique chariot porteur 10. Dit autrement, le chariot porteur 10 permet de transporter de manière stable et sécurisée aussi bien les bacs 51 et/ou les couvercles 41 que le la caisse filaire 60, bien que ces équipements soient de dimensions différentes. Il n'est alors plus nécessaire d'utiliser des chariots adaptés spécifiquement à chaque équipement. En effet, les bacs 51 et la caisse filaire 60 peuvent être transportés de manière stable et sécuritaire par un même chariot porteur 10. En ce sens, la quantité de matériel à transporter entre les sites de nettoyage et de stockage, les cuisines centrales et les lieux de restauration collectives peut être considérablement réduite.

Le système de transport 1 permet en outre de transporter simultanément les bacs 51 et/ou les couvercles 41 et la caisse filaire 60, avec la caisse filaire 60 qui est positionnée et maintenue immobile sur le chariot porteur 10 par la coopération du logement 24 et du premier fil métallique plié 66, et avec les bacs 51 et/ou les couvercles 41 qui sont logés dans le réceptacle de la caisse filaire 60.

Le système de transport 1 offre donc une grande modularité de transport tout en ayant un unique chariot porteur 10, rendant ainsi le transport des équipements 40, 50, 60 relativement simple et peu encombrant.

Des variantes non illustrées sont décrites ci-dessous.

Le premier équipement et le deuxième équipement peuvent être différents, selon l'application du système de transport.

L'organe de calage peut être en relief, tandis que le premier organe de positionnement et le deuxième organe de positionnement sont en creux. Dans l'exemple de réalisation illustré, l'organe de calage est en creux (logement), alors que le premier organe de positionnement et le deuxième organe de positionnement sont en relief (ou saillie).

Le premier organe de positionnement, le deuxième organe de positionnement et l'organe de calage peuvent avoir une forme différente, par exemple circulaire, triangulaire, ou toute autre forme, plutôt qu'une forme rectangulaire.

Les cales peuvent être formées directement par la structure du châssis du chariot porteur.

La poignée peut être montée de différentes manières sur le chariot porteur. Par exemple, l'organe de montagne de la poignée peut être configuré pour coopérer avec les premiers montants, de sorte que les premiers montants servent à la fois d'organes d'empilement et d'organes de montage complémentaire pour le montage de la poignée sur le châssis du chariot porteur.

Plus généralement, l'invention ne se limite pas aux exemples décrits et représentés.

## Revendications

1. Système de transport d'équipements, comprenant un chariot porteur (10) et des équipements présentant des dimensions différentes, à savoir un premier équipement (40, 50) et un deuxième équipement (60), le deuxième équipement (60) comprenant un réceptacle adapté pour recevoir entièrement le premier équipement (40, 50), le chariot porteur (10) comprenant des roues (15) et un châssis (14) pourvu d'un organe de calage (24), le premier équipement (40, 50) et le deuxième équipement (60) étant pourvus respectivement d'un premier organe de positionnement (42, 54) et d'un deuxième organe de positionnement (66) configurés chacun pour coopérer avec l'organe de calage (24) du chariot porteur (10) par engagement par complémentarité de formes de sorte à immobiliser l'un du premier équipement (40, 50) et du deuxième équipement (60) sur le chariot porteur (10) dans une position déterminée ; le chariot porteur (10) étant ainsi configuré pour transporter, sélectivement, le premier équipement (40, 50), le deuxième équipement (60), ainsi que le premier équipement (40, 50) et le deuxième équipement (60) lorsque le premier équipement (40, 50) est logé dans le réceptacle du deuxième équipement (60).

2. Système de transport selon la revendication 1, **caractérisé en ce que** le premier organe de positionnement (42, 54) et le deuxième organe de positionnement (66) ont des dimensions identiques.

3. Système de transport selon la revendication 1 ou 2, **caractérisé en ce que** l'organe de calage (24) présente une forme en creux, tandis que le premier organe de positionnement (42, 54) du premier équipement (40, 50) et le deuxième organe de positionnement (66) du deuxième équipement (60) présentent une forme en relief.

4. Système de transport selon la revendication 3, **caractérisé en ce que** l'organe de calage (24) est défini par un organe de maintien vertical (19) sur lequel le premier organe de positionnement (42, 54) du premier équipement (40, 50) et le deuxième organe de positionnement (66) du deuxième équipement (60) sont configurés pour reposer, et un organe de maintien horizontal (22, 23) configuré pour empêcher le déplacement du premier équipement (40, 50) ou du deuxième équipement (60) lorsque le premier organe de positionnement (42, 54) ou le deuxième organe de positionnement (66) repose sur l'organe de maintien vertical (19).

5. Système de transport selon la revendication 4, **caractérisé en ce que** le réceptacle dudit deuxième équipement (60) comporte une paroi de fond (61) et des parois latérales (62) définissant un volume de réception interne (63) adapté pour loger le premier équipement (40, 50), ladite paroi de fond (61) ayant une face interne (64) tournée vers le volume de réception interne (63) et une face externe (65) opposée à la face interne (64), le deuxième organe de positionnement (66) étant disposé en saillie sur la face externe (65) de la paroi de fond (61).

6. Système de transport selon la revendication 5, **caractérisé en ce que** la paroi de fond (61) recouvre au moins partiellement l'organe de maintien horizontal (22, 23) lorsque le deuxième organe de positionnement (66) coopère avec l'organe de calage (24) du chariot porteur (10).

7. Système de transport selon l'une quelconque des revendications 4 à 6, **caractérisé en ce que** l'organe de maintien horizontal comporte plusieurs cales (22, 23) espacées les unes des autres.

8. Système de transport selon la revendication 7, **caractérisé en ce que** les cales (22, 23) sont agencées par paire, chaque paire de cales (22, 23) étant disposée de manière symétrique par rapport à un plan passant par un centre de l'organe de calage (24).

9. Système de transport selon l'une quelconque des revendications 1 à 6, **caractérisé en ce que** l'organe de calage (24) est un logement, le châssis (14) du chariot porteur (10) définissant une cavité (20) s'étendant entre une paroi de fond (61) du châssis (14) et ledit logement, ledit logement (24) étant ouvert sur ladite cavité (20).

10. Système de transport selon la revendication 7, **caractérisé en ce que** le châssis (14) est pourvu d'une encoche (21) débouchant dans la cavité (20) pour permettre à un utilisateur du système de transport (1) de saisir le premier équipement (40, 50) ou le deuxième équipement (60) lorsque le premier organe de positionnement (42, 54) ou le deuxième organe de positionnement (66) coopère avec l'organe de calage (24) du chariot porteur (10).

11. Système de transport selon l'une quelconque des revendications 5 à 8, **caractérisé en ce que** le deuxième organe de positionnement (66) est centré sur la paroi de fond (61) du deuxième équipement (60).

12. Système de transport selon l'une quelconque des revendications 1 à 11, **caractérisé en ce que** le premier équipement (40, 50) comporte un rebord périphérique formant au moins partiellement le premier organe de positionnement (42, 54).

13. Système de transport selon la revendication 12, **caractérisé en ce que** le premier équipement (40, 50) comprend au moins un bac (51) et/ou au moins un couvercle (41).

14. Système de transport selon l'une quelconque des revendications 1 à 13, **caractérisé en ce que** le deuxième organe de positionnement (66) est formé par un fil métallique plié.

15. Système de transport selon l'une quelconque des revendications 1 à 14, **caractérisé en ce que** le chariot porteur (10) comporte un organe d'empilement (27, 29) et un organe d'empilement complémentaire (28, 31), configurés pour permettre l'empilement du chariot porteur (10) avec au moins un autre chariot porteur (10') du même type de sorte que les roues (15) du chariot porteur (10') qui se trouve au-dessus sont à distance de l'organe de calage (24) du chariot porteur (10) qui se trouve en-dessous.
